# EUROPEAN PATENT SPECIFICATION

(11) **EP 2 910 864 B1**
(45) Date of publication and mention of the grant of the patent: **21.04.2021**
(21) Application number: 15155733.7
(22) Date of filing: 19.02.2015
(51) Int. Cl.: F24F 1/46, F25B 25/00, F25B 41/00, F25D 16/00, F24F 5/00

(54) **Water cooling unit for conditioning systems**
Wasserkühleinheit für Klimaanlagensysteme
Unité de refroidissement d'eau pour des systèmes de conditionnement

(30) Priority: 21.02.2014 IT PD20140037
(43) Date of publication of application: 26.08.2015
(73) Proprietor: Vertiv S.R.L., 35028 Piove di Sacco (PD) (IT)
(72) Inventor: Furlan, Giancarlo, 35126 Padova (IT); Dall'olio, Roberto, 40138 Bologna (IT)
(74) Representative: Modiano, Micaela Nadia

(56) References cited:
- EP-A1- 1 134 523
- JP-A- 2013 119 989
- US-A- 4 567 733

## Description

The present invention relates to a system comprising a water cooling unit and an air-conditioning system.

Currently, in order to cool an enclosed space by means of conditioning units that use refrigerated water (fan coils), these conditioning units are supplied with a transfer fluid, typically water or water with the addition of glycol, which circulates from liquid refrigeration machines, of the so-called "chiller" type, i.e., water cooling unit.

The hydraulic systems for these cooling machines have, on a same line, pumping means adapted to propel a transfer fluid through an exchanger for cooling the transfer fluid, which is none other than the evaporator of an associated water cooling refrigeration system.

A similar type of system also has a free cooling device, known in the jargon as "freecooling", for said transfer fluid.

This free cooling device has the limitation that it is effective only in the presence of specific external climate conditions, i.e., only if the external air is cool enough to be able to refrigerate, in an adapted exchange battery, the water that is intended to enter the evaporator.

Combined devices that comprise water cooling units with integrated adiabatic cooling and combined devices that comprise water cooling units with integrated free cooling are also known Patent document JP-A-2013-119989 describes a combined device according to the preamble of claim 1.

Although these devices are widespread and appreciated, they have additional costs in terms of energy consumption, whereas currently, in the opposite direction, there is an increasingly felt need to reduce the energy consumption required to cool a stream of water intended to flow through a climate control system.

The aim of the present invention is to provide a system that is capable of obviating the cited limitations of the background art.

Within this aim, an object of the invention is to provide a system that is simple and economical, particularly as regards consumption.

This aim, as well as these and other objects that will become better apparent hereinafter, are achieved by a system according to claim 1.

Further characteristics and advantages of the invention will become better apparent from the description of two preferred but not exclusive embodiments of the system according to the invention, illustrated by way of nonlimiting example in the accompanying drawings, wherein:
Figure 1 is a schematic view of a water cooling unit comprised in the invention;
Figure 2 is a second schematic view of a system according to the invention, in a first embodiment thereof;
Figure 3 is a front view of a cooling unit comprised in the invention, in a second embodiment;
Figure 3a is a schematic view of a detail of Figure 3;
Figure 4 is a sectional side view of a part of the cooling unit of Figure 3;
Figure 5 is a hydraulic diagram of the cooling unit of Figures 3 and 4;
Figure 6 is a detailed diagram of a component of the hydraulic diagram of Figure 5.

With reference to the figures, a water cooling unit comprised in the invention is designated generally by the reference numeral 10.

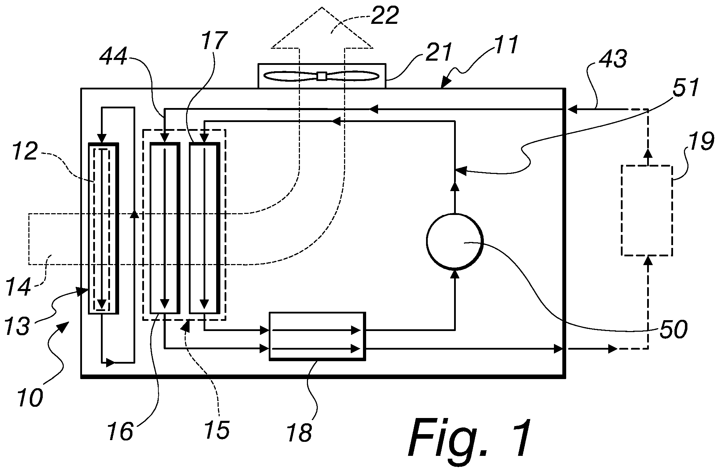

The cooling unit 10 comprises, within a box-like container 11:
- an air precooling panel 12, provided with a matrix of through holes, associated with means 13 for cooling a stream of external air, designated by the arrow 14 in Figure 1, that passes through said matrix of holes,
- a pair 15 of laterally adjacent heat exchange batteries; of the pair of laterally adjacent batteries, a first battery 16 is for freecooling of the water entering an evaporator 18, which is part of the water cooling unit 10, and a second battery 17 is a condensation battery for the evaporator 18,
- means 21 for the exit outside the box-like container 11 of the heated air 22 that exits from the pair 15 of laterally adjacent heat exchange batteries,
- first means for hydraulic connection between the water return from an air-conditioning system 19 and the water inlet of the first freecooling battery 16, and
- second means for hydraulic connection between the first freecooling battery 16 and the evaporator 18.

A simplified diagram of the device 10 is shown clearly in Figure 1.

In Figure 1, the numeral 50 designates a compressor of a refrigeration circuit 51.

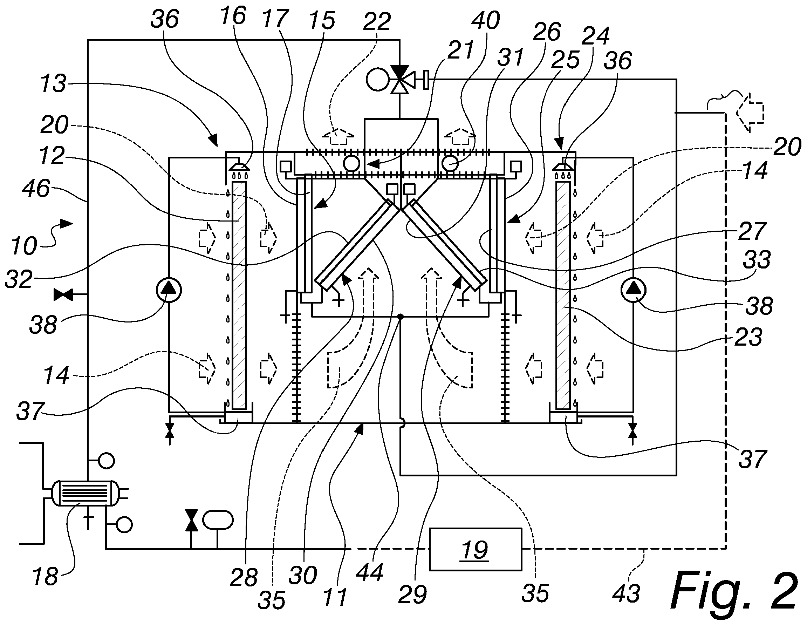

In a first embodiment of the system according to the invention, which is to be understood as a nonlimiting example of the invention, shown schematically in Figure 2, there are, symmetrical with respect to the first ones, a second air precooling panel 23, with corresponding associated cooling means 24, and a corresponding second pair 25 of heat exchange batteries, a first battery 26 for freecooling of the water that enters the evaporator 18 of the air-conditioning system 19, and the second battery 27 is for condensation for the evaporator 18.

Two additional symmetrical pairs of batteries, 28 and 29 respectively, are also present and are arranged so as to be inclined in a central position between the two pairs of batteries, the first one 15 and the second one 25, which are instead arranged vertically; each one of the third and fourth pairs of batteries 28 and 29 has a corresponding first battery 30 and 31 that is directed downwardly and a second battery 32 and 33 that is directed upwardly; the pairs of batteries 28 and 29 are adapted to affect a stream of rising pre-cooled external air 35, which also arrives from the precooling panel 12 or 23.

The position of the pairs of batteries as described is to be understood as a nonlimiting example of the invention.

Each air precooling panel, for example 12 but also 23, comprises a honeycomb panel, the cells of which are open in the air passage direction.

The means 13 and 24 for cooling the stream of external air that passes through the precooling panel 12 and 23 are constituted by
- an upper water dispenser 36, which is adapted to wet downward from above the corresponding honeycomb panel 12 and 23,
- a lower collecting vessel 37,
- a recirculation pump 38 for the rise of the air precooling water from the lower vessel 37 to the upper dispenser 36.

The upper dispenser 36 can be constituted for example by a spray head of the shower type, which is substantially as long as the precooling panel 12 and 23.

It is to be understood that the upper dispenser 36 can also be of another type, depending on the requirements and technical needs.

The first and second pairs of batteries 15 and 25, which are vertical, are struck directly by the stream of pre-cooled air 20.

The means 21 for exit out of the box-like container 11 for the heated air 22 that exits from the pairs of laterally adjacent heat exchange batteries comprise ventilation means, for example a series of fans 40, which are arranged in the upper part of the boxlike container 11 and determine the movement of the air from the outside and through the pre-cooling panels and then through the pairs of batteries.

The heated air 22 is emitted through corresponding grilles above the box-like body 11.

The first means for hydraulic connection between the water return 43 of the air-conditioning system 19 and the water inlet 44 of the freecooling batteries 16, 26, 30 and 31 comprise a series of ducts with nodes and branches adapted to supply in parallel all the freecooling heat exchange batteries 16, 26, 30 and 31.

The second means for hydraulic connection between the freecooling batteries 16, 26, 30 and 31 and the evaporator 18 likewise comprise a series of ducts with connectors adapted to convey in parallel the cooled water that exits from all the freecooling heat exchange batteries 16, 26, 30 and 31 toward the single duct 46 that enters the evaporator 18.

It is to be understood that the evaporator 18 is arranged within the box-like container 11, but it is to be understood that a constructive variation of the cooling unit 10 according to the invention in which the evaporator 18 is external with respect to the box-like container 11 is equally equivalent.

In the water cooling unit 10 according to the invention, therefore, cooling of the external air occurs by way of the evaporation of the water that descends on the precooling panel 12 and 23.

Heat exchange occurs in the honeycomb panel.

The warm air, passing through the honeycomb panel sprayed with water, by simple contact and due to evaporation, transfers a large fraction of the heat contained therein.

The air is thus cooled.

At this point, the air thus processed, which is colder, provides a double benefit:
- in mechanical operation, i.e., the air that enters the condenser of the evaporator 18, i.e., the second exchange batteries 17, 27, 32 and 33, is cooler and therefore there is higher efficiency in the refrigeration cycle;
- in freecooling operation, since the air that strikes the first batteries 16, 26, 30 and 31 is at a lower temperature than the outside temperature.

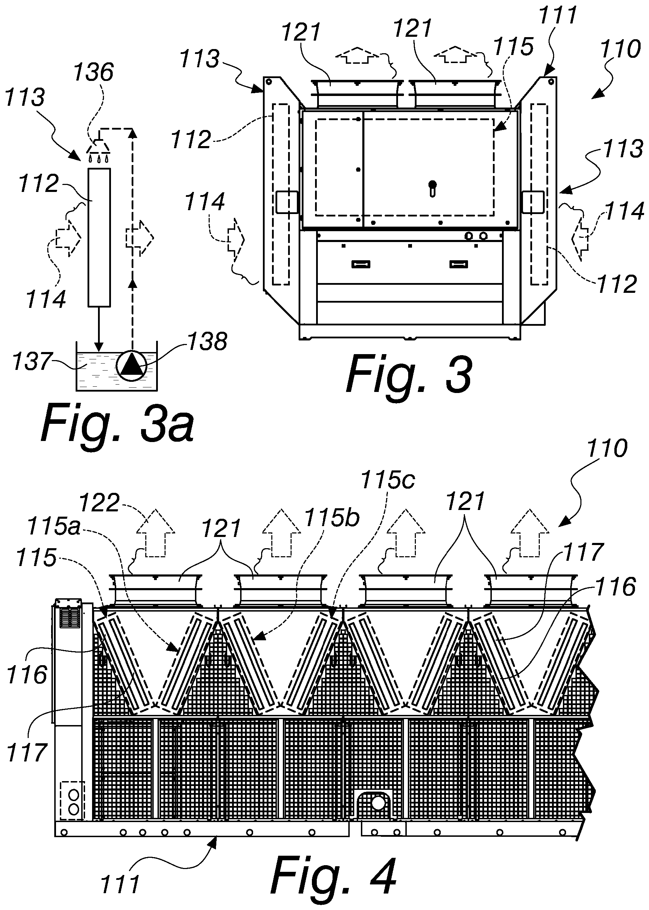

Figures 3 and 4 show the cooling unit of a second embodiment of the system according to the invention, designated therein by the reference numeral 110.

The cooling unit 110 comprises, within a box-like container 111:
- two opposite air precooling panels 112, arranged so as to affect the lateral faces of the box-like container 111 substantially along its entire length; each precooling panel 112 is provided, in a manner similar to what has been described above, with a matrix of through holes, and is associated with means 113 for cooling an external air stream, designated by the arrow 114 in Figures 3 and 3a, which passes through the matrix of holes,
- a series of pairs 115, 115a, 115b, 115c of laterally adjacent heat exchange batteries; the pairs of batteries 115, 115a, 115b, 115c are arranged so as to face each other two by two in the direction of the length of the box-like container 111 and again two by two so as to define a V-shape in a lateral view, as shown in Figure 4;
- of each pair 115, 115a, 115b, 115c of laterally adjacent batteries, a first battery 116 is for freecooling of the water that enters an evaporator 118, which is part of the water cooling unit 110, and the second battery 117 is for condensation for the evaporator 118,
- means 121 for exit out of the box-like container 111 of the heated air 122 that exits from each pair 115 of laterally adjacent heat exchange batteries; the heated air exit means 121 are constituted for example by one or more fans, optionally arranged side-by-side above two pairs of batteries, for example 115 and 115a, which are arranged in a V-shape;
- first means for hydraulic connection between the water return from an air-conditioning system 119 and the water inlet of the first freecooling batteries 116, and
- second means for hydraulic connection between the first freecooling batteries 116 and the evaporator 118.

The V-shaped configuration of the arrangement of the pairs of batteries, for example the first pairs 115 and 115a, and the second pairs of batteries 115b and 115c, refer to a configuration that can be shown schematically in a side view, as in Figure 4.

The individual pairs of batteries 115, 115a, 115b, 115c are extended transversely to the box-like container 111 so as to occupy it almost entirely, or entirely, over its width, as clearly exemplified in Figure 3.

The means 113 for cooling the external air stream that passes through the precooling panel 112 are shown schematically in Figure 3 and comprise, as described above for the first embodiment:
- an upper water dispenser 136, which is adapted to wet downward from above the corresponding honeycomb panel 112,
- a lower collecting vessel 137,
- a recirculation pump 138 for the rise of the air precooling water from the lower vessel 137 to the upper dispenser 136.

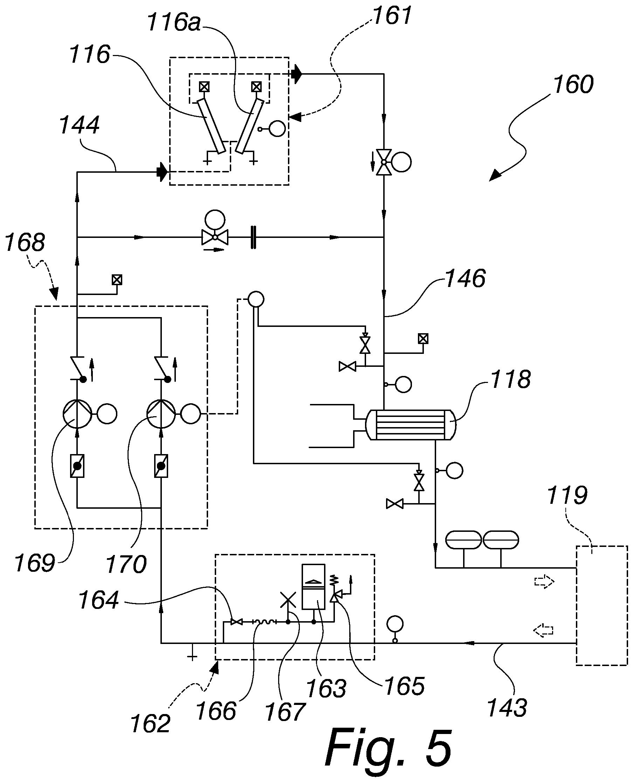

Figure 5 shows schematically the hydraulic circuit 160 for cooling the water intended for a conditioning system 119.

In the hydraulic circuit 160, the first means for hydraulic connection between the water return 143 of the air-conditioning system 119 and the water inlet 144 of the freecooling batteries 116 and 116a in the figure, designated as freecooling battery assembly 161, comprise a series of ducts with nodes and branches adapted to supply in parallel all the freecooling heat exchange batteries 116 and 116a.

Between these points, water return 143 and water inlet 144 to the assembly 161 of freecooling batteries, it is possible optionally to interpose
- a safety assembly 162, with an expansion vessel 163, a tap 164, a safety valve 165, a flexible hose 166 and a venting element 167,
- a pump assembly 168, which comprises two pumps 169 and 170 arranged in parallel.

The second means for hydraulic connection between the assembly 161 of freecooling batteries 116 and 116a and the evaporator 118 likewise comprise a series of ducts with connectors adapted to convey the cooled air that exits from the assembly 161 of heat exchange batteries for freecooling 116, 116a toward the single duct 146 that enters the evaporator 118.

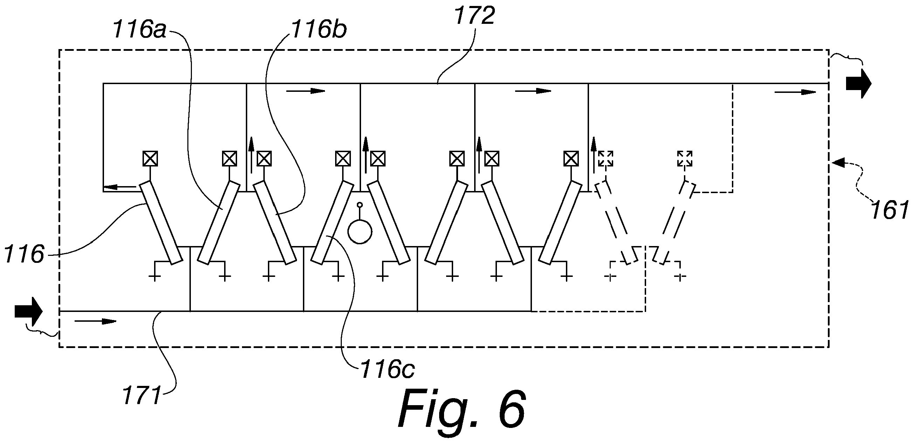

Figure 6 shows schematically the assembly 161 of freecooling batteries 116, 116a, 116b, 116c.

As clearly visible in Figure 6, the freecooling batteries 116, 116a, 116b, 116c are connected in parallel, with a single loading duct 171 and a single output duct 172, between which the freecooling batteries are connected in parallel, conveniently arranged in pairs in front of each other so as to define a V-shaped mutual arrangement in a side view.

In practice it has been found that the invention achieves the intended aim and objects.

In particular, the invention provides a device for optimizing the efficiency of a water cooling system that is simple and economical, both in terms of structure and in terms of consumption, since the precooling of the external air occurs by simple air-water heat exchange with evaporation of the latter.

Furthermore, the invention provides a device for optimizing the efficiency of a water cooling system that has a reduced environmental impact with respect to the background art, since there is no resort to additional compressors or other electrically costly components.

The invention thus conceived is susceptible of numerous modifications and variations, within the scope of the appended claims.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system comprising
- a water cooling unit (10), an air-conditioning system (19) and a box-like container (11), the water cooling unit (10) being arranged within said box-like container (11),
- an air precooling panel (12), provided with a matrix of through holes, and associated with means (13) configured to cool a stream of external air (14) that passes through said matrix of holes,
- at least one pair (15) of laterally adjacent heat exchange batteries (16, 17),
- an evaporator (18) having a condenser (17),
- a refrigeration circuit (51) having a compressor (50) said refrigeration circuit (51) being a closed refrigeration circuit extending through said second battery (17), said evaporator (18) and said compressor (50),
- means (21) configured to provide an exit outside the box-like container (11) of the heated air (22) that exits from said at least one pair (15) of laterally adjacent heat exchange batteries,
wherein for each pair of laterally adjacent batteries the first battery (16) is configured to provide a freecooling of the water entering said evaporator (18) and the second battery (17) is a condensation battery of said condenser of the evaporator (18), the system **characterized by** the unit (10) further comprising:
- first means configured to provide a hydraulic connection between the water return (43) of said air-conditioning system (19) and the water inlet (44) of said at least one freecooling battery (16), and
- second means configured to provide a hydraulic connection between said at least one freecooling battery (16) and said evaporator (18).

2. The system according to claim 1, **characterized in that** said air precooling panel (12) comprises a honeycomb panel the cells of which are open in the air passage direction.

3. The system according to one or more of the preceding claims, **characterized in that** said means (13) for cooling the stream of external air (14) that passes through said precooling panel are constituted by
- an upper water dispenser (36), suitable to wet said honeycomb panel downward from above,
- a lower collecting vessel (37),
- a recirculation pump (38) for the rise of the air precooling water from said lower vessel (37) to said upper dispenser (36).

4. The system according to one or more of the preceding claims, **characterized in that** it comprises, within the box-like container (11, 111):
- two opposite air precooling panels (112), arranged so as to affect the lateral faces of the box-like container (111) substantially along its entire length, each precooling panel (112) being provided with a matrix of through holes and being associated with means (113) for cooling an external air stream (104) that flows through said matrix of holes,
- a series of pairs (115, 115a, 115b, 115c) of laterally adjacent heat exchange batteries,
- of each pair (115, 115a, 115b, 115c) of laterally adjacent batteries, a first battery (116) is for freecooling of the water in input to an evaporator (118) and the second battery (117) is a condensation battery for the evaporator (118),
- means (121) for the exit outside the box-like container (111) of the heated air (122) that exits from each pair (115) of laterally adjacent heat exchange batteries,
- first means for hydraulic connection between the water return from an air-conditioning system (119) and the water inlet of the first freecooling batteries (116), and
- second means for hydraulic connection between the first freecooling batteries (116) and said evaporator (118).

5. The system according to claim 4, **characterized in that** said heat exchange battery pairs (115, 115a, 115b, 115c) are arranged two by two so as to face each other in the direction of the length of the box-like container (111), and are arranged, again two by two, so as to define a V-shaped configuration, for example first pairs (115, 115a) and second pairs of batteries (115b, 115c).

6. The system according to one or more of the preceding claims, **characterized in that** the individual pairs of batteries (15, 115, 115a, 115b, 115c) are extended transversely to the box-like container (11, 111) so as to occupy it almost entirely or entirely along its width.

7. The system according to one or more of the preceding claims, **characterized in that** the freecooling batteries (116, 116a, 116b, 116c) of a group of freecooling batteries (161) are connected in parallel, with a single loading duct (171) and a single output duct (172), between which said freecooling batteries (116, 116a, 116b, 116c) are connected in parallel.

## Patentansprüche

1. Ein System, das Folgendes umfasst:
- eine Wasserkühleinheit (10), ein Klimaanlagensystem (19) und einen kastenartigen Behälter (11), wobei die Wasserkühleinheit (10) in dem kastenartigen Behälter (11) angeordnet ist,
- eine Luft-Vorkühltafel (12), ausgestattet mit einer Matrix von Durchgangslöchern und verbunden mit Mitteln (13), die ausgebildet sind, um einen externen Luftstrom (14) zu kühlen, der durch die Löchermatrix dringt,
- mindestens ein Paar (15) seitlich benachbarter Wärmetauschbatterien (16, 17),
- einen Verdampfer (18) mit einem Kondensator (17),
- einen Kühlkreis (51) mit einem Kompressor (50), wobei der Kühlkreis (51) ein geschlossener Kühlkreis ist, der sich durch die zweite Batterie (17), den Verdampfer (18) und den Kompressor (50) erstreckt,
- Mittel (21), ausgebildet, um einen Austritt der erwärmten Luft (22), die aus dem mindestens einen Paar (15) seitlich benachbarter Wärmetauschbatterien austritt, aus dem kastenartigen Behälter (11) zu ermöglichen,
wobei bei jedem Paar seitlich benachbarter Batterien die erste Batterie (16) ausgebildet ist, um für Freecooling des Wassers zu sorgen, das in den Verdampfer (18) eintritt, um die zweite Batterie (17) eine Kondensationsbatterie des Kondensators des Verdampfers (18) ist; wobei das System **dadurch gekennzeichnet ist, dass** die Einheit (10) weiter Folgendes umfasst:
- erste Mittel, ausgebildet, um eine Hydraulikverbindung zwischen der Wasserrückführung (43) des Klimaanlagensystems (19) und dem Wassereinlass (44) der mindestens einen Freecooling-Batterie (16) bereitzustellen, und
- zweite Mittel, ausgebildet, um eine Hydraulikverbindung zwischen der mindestens einen Freecooling-Batterie (16) und dem Verdampfer (18) bereitzustellen.

2. Das System gemäß Anspruch 1, **dadurch gekennzeichnet, dass** die Luft-Vorkühltafel (12) eine Wabenplatte umfasst, deren Zellen in der Luftdurchlassrichtung offen sind.

3. Das System gemäß einem oder mehreren der obigen Ansprüche, **dadurch gekennzeichnet, dass** die Mittel (13) zum Kühlen des externen Luftstroms (14), der die Vorkühltafel durchdringt, aus Folgendem bestehen:
- einem oberen Wasserspender (36), geeignet, die Wabenplatte von oben nach unten zu benetzen,
- einem unteren Auffanggefäß (37),
- einer Rückführpumpe (38) für den Aufstieg des Luft-Vorkühlwassers von dem unteren Gefäß (37) zu dem oberen Spender (36) .

4. Das System gemäß einem oder mehreren der obigen Ansprüche, **dadurch gekennzeichnet, dass** es, innerhalb des kastenartigen Behälters (11, 111), Folgendes umfasst:
- zwei gegenüberliegende Luft-Vorkühltafeln (112), angeordnet, um die Seitenflächen des kastenartigen Behälters (111) im Wesentlichen über seine gesamte Länge zu beeinflussen, wobei jede Vorkühltafel (112) mit einer Matrix von Durchgangslöchern versehen und mit Mitteln (113) zum Kühlen eines externen Luftstroms (104) verbunden ist, der durch die Löchermatrix strömt,
- eine Reihe von Paaren (115, 115a, 115b, 115c) seitlich benachbarter Wärmetauschbatterien,
- wobei eine erste Batterie (116) jedes Paares (115, 115a, 115b, 115c) seitlich benachbarter Batterien zum Freecooling des Wassers dient, das in einen Verdampfer (118) einströmt, und die zweite Batterie (117) eine Kondensationsbatterie für den Verdampfer (118) ist,
- Mittel (121) für den Austritt der erwärmten Luft (122), die aus jedem Paar (115) seitlich benachbarter Wärmetauschbatterien austritt, aus dem kastenartigen Behälter (111),
- erste Mittel zur Hydraulikverbindung zwischen der Wasserrückführung von einem Klimaanlagensystem (119) und dem Wassereinlass der ersten Freecooling-Batterien (116), und
- zweite Mittel zur Hydraulikverbindung zwischen den ersten Freecooling-Batterien (116) und dem Verdampfer (118).

5. Das System gemäß Anspruch 4, **dadurch gekennzeichnet, dass** die Paare (115, 115a, 115b, 115c) von Wärmetauschbatterien jeweils zu zweit einander zugewandt in der Längsrichtung des kastenartigen Behälters (111) angeordnet und, wiederum jeweils zu zweit, angeordnet sind, um eine V-Konfiguration zu bestimmen, zum Beispiel erste Paare (115, 115a) und zweite Paare (115b, 115c) von Batterien.

6. Das System gemäß einem oder mehreren der obigen Ansprüche, **dadurch gekennzeichnet, dass** die einzelnen Paare (15, 115, 115a, 115b, 115c) von Batterien sich quer zum kastenartigen Behälter (11, 111) erstrecken, so dass sie ihn vollständig oder fast vollständig über seine Breite belegen.

7. Das System gemäß einem oder mehreren der obigen Ansprüche, **dadurch gekennzeichnet, dass** die Freecooling-Batterien (116, 116a, 116b, 116c) einer Gruppe von Freecooling-Batterien (161) parallel angeschlossen sind, mit einer einzigen Ladeleitung (171) und einer einzigen Ausgangsleitung (172), zwischen welchen die Freecooling-Batterien (116, 116a, 116b, 116c) parallel angeschlossen sind.

## Revendications

1. Système comportant :
- une unité de refroidissement d'eau (10), un système de conditionnement d'air (19) et un contenant analogue à un boîtier (11), l'unité de refroidissement d'eau (10) étant agencée à l'intérieur dudit contenant analogue à un boîtier (11),
- un panneau de pré-refroidissement d'air (12), pourvu d'une matrice de trous traversants, et associé à des moyens (13) configurés pour refroidir un flux d'air externe (14) qui passe à travers ladite matrice de trous,
- au moins une paire (15) de batteries d'échange de chaleur latéralement adjacentes (16, 17),
- un évaporateur (18) ayant un condenseur (17),
- un circuit de réfrigération (51) ayant un compresseur (50), ledit circuit de réfrigération (51) étant un circuit de réfrigération fermé s'étendant à travers ladite seconde batterie (17), ledit évaporateur (18) et ledit compresseur (50),
- des moyens (21) configurés pour fournir une sortie à l'extérieur du contenant analogue à un boîtier (11) de l'air chauffé (22) qui sort de ladite au moins une paire (15) de batteries d'échange de chaleur latéralement adjacentes,
dans lequel pour chaque paire de batteries latéralement adjacentes, la première batterie (16) est configurée pour assurer un refroidissement naturel de l'eau entrant dans ledit évaporateur (18) et la seconde batterie (17) est une batterie de condensation dudit condenseur de l'évaporateur (18), le système étant **caractérisé en ce que** l'unité (10) comporte en outre :
- des premiers moyens configurés pour assurer une liaison hydraulique entre le retour d'eau (43) dudit système de conditionnement d'air (19) et l'entrée d'eau (44) de ladite au moins une batterie de refroidissement naturel (16), et
- des seconds moyens configurés pour assurer une liaison hydraulique entre ladite au moins une batterie de refroidissement naturel (16) et ledit évaporateur (18).

2. Système selon la revendication 1, **caractérisé en ce que** ledit panneau de pré-refroidissement d'air (12) comporte un panneau en nid d'abeille dont les cellules sont ouvertes dans la direction de passage de l'air.

3. Système selon une ou plusieurs des revendications précédentes, **caractérisé en ce que** lesdits moyens (13) pour refroidir le flux d'air externe (14) qui passe à travers ledit panneau de pré-refroidissement sont constitués de :
- un distributeur d'eau supérieur (36), adapté pour mouiller ledit panneau en nid d'abeille vers le bas à partir du dessus,
- un récipient de collecte inférieur (37),
- une pompe de recirculation (38) pour la montée de l'eau de pré-refroidissement d'air depuis ledit récipient inférieur (37) jusqu'audit distributeur supérieur (36).

4. Système selon une ou plusieurs des revendications précédentes, **caractérisé en ce qu'**il comporte, à l'intérieur du contenant analogue à un boîtier (11, 111) :
- deux panneaux de pré-refroidissement d'air (112) opposés, agencés de manière à affecter les faces latérales du contenant analogue à un boîtier (111) pratiquement sur toute sa longueur, chaque panneau de pré-refroidissement (112) étant pourvu d'une matrice de trous traversants et étant associé à des moyens (113) pour refroidir un flux d'air externe (104) qui s'écoule à travers ladite matrice de trous,
- une série de paires (115, 115a, 115b, 115c) de batteries d'échange de chaleur latéralement adjacentes,
- parmi chaque paire (115, 115a, 115b, 115c) de batteries latéralement adjacentes, une première batterie (116) est destinée au refroidissement naturel de l'eau en entrée d'un évaporateur (118) et la seconde batterie (117) est une batterie de condensation pour l'évaporateur (118),
- des moyens (121) pour la sortie à l'extérieur du contenant analogue à un boîtier (111) de l'air chauffé (122) qui sort de chaque paire (115) de batteries d'échange de chaleur latéralement adjacentes,
- des premiers moyens pour une liaison hydraulique entre le retour d'eau à partir d'un système de conditionnement d'air (119) et l'entrée d'eau des premières batteries de refroidissement naturel (116), et
- des seconds moyens pour une liaison hydraulique entre les premières batteries de refroidissement naturel (116) et ledit évaporateur (118).

5. Système selon la revendication 4, **caractérisé en ce que** lesdites paires de batteries d'échange de chaleur (115, 115a, 115b, 115c) sont agencées deux par deux de manière à être l'une en face de l'autre dans la direction de la longueur du contenant analogue à un boîtier (111), et sont agencées, de nouveau deux par deux, de manière à définir une configuration en forme de V, par exemple des premières paires (115, 115a) et des secondes paires (115b, 115c) de batteries.

6. Système selon une ou plusieurs des revendications précédentes, **caractérisé en ce que** les paires individuelles de batteries (15, 115, 115a, 115b, 115c) s'étendent transversalement au contenant analogue à un boîtier (11, 111) de manière à l'occuper pratiquement entièrement ou entièrement sur sa largeur.

7. Système selon une ou plusieurs des revendications précédentes, **caractérisé en ce que** les batteries de refroidissement naturel (116, 116a, 116b, 116c) d'un groupe de batteries de refroidissement naturel (161) sont raccordées en parallèle, avec une seule conduite de charge (171) et une seule conduite de sortie (172), entre lesquelles lesdites batteries de refroidissement naturel (116, 116a, 116b, 116c) sont raccordées en parallèle.
